**Europäisches Patentamt**

**European Patent Office**

**Office européen des brevets**

(19)

(11) Numéro de publication : **0 088 097 B1**

(12) **FASCICULE DE BREVET EUROPÉEN**

(45) Date de publication du fascicule du brevet :
26.03.86

(51) Int. Cl.⁴ : **B 27 F 1/00, F 16 B 12/24**

(21) Numéro de dépôt : **82902680.6**

(22) Date de dépôt : **10.09.82**

(86) Numéro de dépôt international :
**PCT/FR 82/00148**

(87) Numéro de publication internationale :
**WO/8301036 (31.03.83 Gazette 83/08)**

(54) **PROCEDE D'ASSEMBLAGE DE CADRES A COUPES D'ONGLETS.**

(30) Priorité : **16.09.81 FR 8117609**

(43) Date de publication de la demande :
**14.09.83 Bulletin 83/37**

(45) Mention de la délivrance du brevet :
**26.03.86 Bulletin 86/13**

(84) Etats contractants désignés :
**AT BE CH DE GB LI LU NL SE**

(56) Documents cités :
**CH-A- 328 819**
**CH-A- 337 653**
**DE-A- 2 838 233**
**DE-A- 2 919 564**
**DE-A- 2 927 942**
**DE-C- 55 415**
**DE-C- 61 792**
**DE-C- 538 161**
**FR-A- 2 142 621**
**US-A- 1 700 683**
**US-A- 2 864 414**
**US-A- 2 917 089**
**US-A- 3 734 381**
**US-A- 4 127 226**

(73) Titulaire : **VANAGO, Joseph**
**1, Rue des Chaux**
**F-69340 Francheville le Haut (FR)**

(72) Inventeur : **VANAGO, Joseph**
**1, Rue des Chaux**
**F-69340 Francheville le Haut (FR)**

(74) Mandataire : **Schmitt, John**
**Cabinet John Schmitt 9, rue Pizay**
**F-69001 Lyon (FR)**

Jouve, 18, rue St-Denis, 75001 Paris, France

**Description**

La présente invention concerne un procédé d'assemblage de cadres à coupes d'onglets basé sur l'utilisation de pièces d'angles.

Les modèles de pièces d'angles connus affectent différentes formes : carrées, rectangulaires, ovales ou cylindriques. Ces pièces sont le plus souvent en bois et se placent dans les onglets du cadre. Seules les pièces cylindriques sont utilisées industriellement et portent le nom de « tourillons » et présentent des avantages et des inconvénients.

Les avantages sont les suivants : un seul type d'usinage sur les deux pièces à assembler ; l'usinage n'affaiblit pas le bois ; facilité d'exécution par utilisation de perceuse à entraxes fixes ; précision ; prépositionnement rigoureux des pièces ; standardisation aisée des assemblages, les machines (perceuse-tourillonneuse) pouvant être intégrées à la chaîne d'usinage ; économie de bois, la longueur de la pièce étant limitée à l'arasement ; aspect traditionnel conservé, permet la pose de fausses chevilles ; possibilité d'assemblage de pièces courbes sur lesquelles le fil du bois est coupé ; positionnement précis des différentes pièces des meubles démontables : côté, dessus, dessous, cloisons.

Les inconvénients sont résumés ci-après : la pose des tourillons nécessite une opération supplémentaire sur une machine spéciale ; il n'y a pas de possibilité de rattrapage si l'usinage n'a pas été exécuté avec une grande précision (exemple de cadres avec coupes à 45° sur la moulure) dans le cas de traverse large ce système n'empêche pas les fentes dues au retrait du bois ; les tourillons ne conviennent pas pour l'assemblage de pièces de faible section dans lesquelles on ne peut pas loger deux tourillons compte tenu de l'entraxe minimum ; la mise en œuvre des tourillons calibrés et un perçage sans jeu au diamètre des tourillons ; les tourillons sont enfoncés dans leur logement au marteau ou au pistolet ; il est impossible d'avoir à la fois des tourillons parfaitement calibrés et des trous percés sans jeu, leur enfoncement provoque les défauts suivants : axes divergents ; embouts matés qui empêchent un enfoncement parallèle ou même parfois tout assemblage sans retouche manuelle de l'embout du tourillon ; chacun de ces cas, donne toujours des cadres voilés et des décalages que l'on ne peut rattraper à l'onglet surtout si les pièces sont moulurées.

En plus des défauts, provoqués par les tourillons eux-mêmes, le perçage du logement du tourillon est délicat. Si les machines utilisées pour le perçage sont précises, les mèches employées pour celui-ci ne restent pas précises. En effet, à l'origine les mèches sont parfaitement concentriques ainsi que les mandrins utilisés. Mais, sur la même série en cours d'usinage, les mèches chauffent, se désaffûtent, se voilent, et ne peuvent donc plus permettre un perçage sans jeu. On obtient alors des perçages décalés, divergents ou plongeants qui provoquent à l'assemblage un désaffleurement des éléments du cadre ou son voilage une fois monté. Le rattrapage de ces défauts est impossible. A la rigueur on peut faire des retouches manuelles, mais elles sont longues et délicates, et surtout si les cadres sont moulurés, et par conséquent onéreuses.

Un des buts de l'invention est de fournir une pièce d'angle dont la forme permet l'usinage de son logement sur deux ou quatre éléments de cadre à la fois. Elle est caractérisée en ce qu'elle est plate, a une épaisseur traditionnelle égale au tiers de celle des éléments à assembler, qu'elle est réalisée en bois, en métal ou en toute autre matière, que ses extrémités sont arrondies, biseautées, taillées en sifflet ou ogivales et que sa surface peut être striée pour retenir un film de colle qu'il est recommandé d'y déposer.

Cette pièce d'angle offre les avantages du tourillon mais n'en possède pas les inconvénients. De surcroît, elle présente les avantages suivants : un seul type d'usinage sur les deux pièces à assembler ; l'usinage n'affaiblit pas le bois ; facilité d'exécution, par l'emploi d'une machine simple et d'un gabarit facile à utiliser ; précision ; prépositionnement rigoureux des pièces ; standardisation aisée des assemblages : machines, défonceuse, tronçonneuse, mortaiseuse, pouvant être intégrées facilement à la chaîne d'usinage ; économie de bois, longueur de la pièce limitée à l'arasement ; conserve l'aspect traditionnel ; permet la pose de vraies chevilles à l'ancienne au lieu de fausses avec le tourillon, d'où renforcement de l'assemblage ; assemblage de pièces courbes sur lesquelles le fil du bois est coupé ; la pose de la pièce d'angle suivant l'invention ne nécessite pas de machine spéciale ; la précision de l'usinage de l'assemblage est absolue, donc aucune nécessité de rattrapage ; dans le cas de traverses larges, l'assemblage empêche les fentes dues au retrait du bois ; lesdites pièces d'angle conviennent même pour l'assemblage des pièces de très faible section ; l'aspect esthétique est conservé, il permet même de poser de véritables chevilles à l'ancienne et de l'améliorer par son authenticité.

Avec les dispositifs connus, y compris celui décrit par le brevet U.S.-A-1 700 683, on coupe deux angles aux deux extrémités d'une seule pièce et l'usinage du logement de la pièce d'assemblage a lieu dans chaque côté de l'angle séparément. L'assemblage des cadres ainsi réalisés, laisse apparaître de nombreux défauts tels que désaffleurement et formation d'ajours angulaires par exemple.

Au contraire, selon le procédé objet de l'invention, on coupe les deux onglets d'un même angle formé par deux pièces à la fois pour obtenir en une seule coupe des angles complémentaires et on usine le logement de la pièce d'angle, simultanément sur les deux côtés adjacents de l'angle constitué par les deux pièces assemblées, ce qui garantit la précision et la planéité de l'assemblage sans retouche.

Les dessins annexés, qui représentent plusieurs exemples de formes de pièces d'angle ainsi que les schémas des machines et de leur implantation, permettront de bien comprendre la description qui va suivre en s'y référant.

Les figures 1 à 9 représentent des formes différentes de pièces d'angle.

La figure 10 représente les tracés en traits pleins et également en pointillés de l'usinage du logement d'une pièce d'angle.

Les figures 11 à 18 montrent les pièces d'angles en place dans leur logement.

La figure 19 est une vue en élévation d'une chaîne de travail avec les différentes machines et postes d'utilisation.

La figure 20 en est la vue en plan par-dessus.

La figure 21 est une vue en plan schématique de la position des machines aux angles d'un cadre pour l'usinage du logement des pièces d'angle suivant des cas différents.

La figure 22 représente la position de moulures sur une machine pour tronçonnage d'angles spéciaux.

Les figures 23 et 24 représentent des guides utilisables pour le tronçonnage de moulures respectivement montrés en élévation et en plan par-dessus.

La figure 25 montre un gabarit de montage de cadre à traverse de forme dite « à chapeau de gendarme ».

La figure 26 représente un cadre positionné sur le gabarit de la figure 25.

La figure 27 montre le gabarit de la figure 25 fixé sur la table d'une tronçonneuse double.

La figure 28 représente un gabarit pour cadre à deux traverses de forme.

La figure 29 montre le cadre positionné sur le gabarit de la figure 28.

La figure 30 est un gabarit pour cadre à quatre traverses de forme.

La figure 31 montre l'orientation d'un gabarit à chaque opération, en traits pleins première orientation, en pointillés la suivante.

Les figures 32 et 33 représentent un gabarit pour cadre rond, respectivement vu en plan par-dessus et en élévation.

La figure 34 montre en plan par-dessus un gabarit en deux parties mobiles rapprochables par cames.

Les figures 35 et 36 sont des vues respectivement en coupe et en plan par-dessus des cames du gabarit montré figure 34.

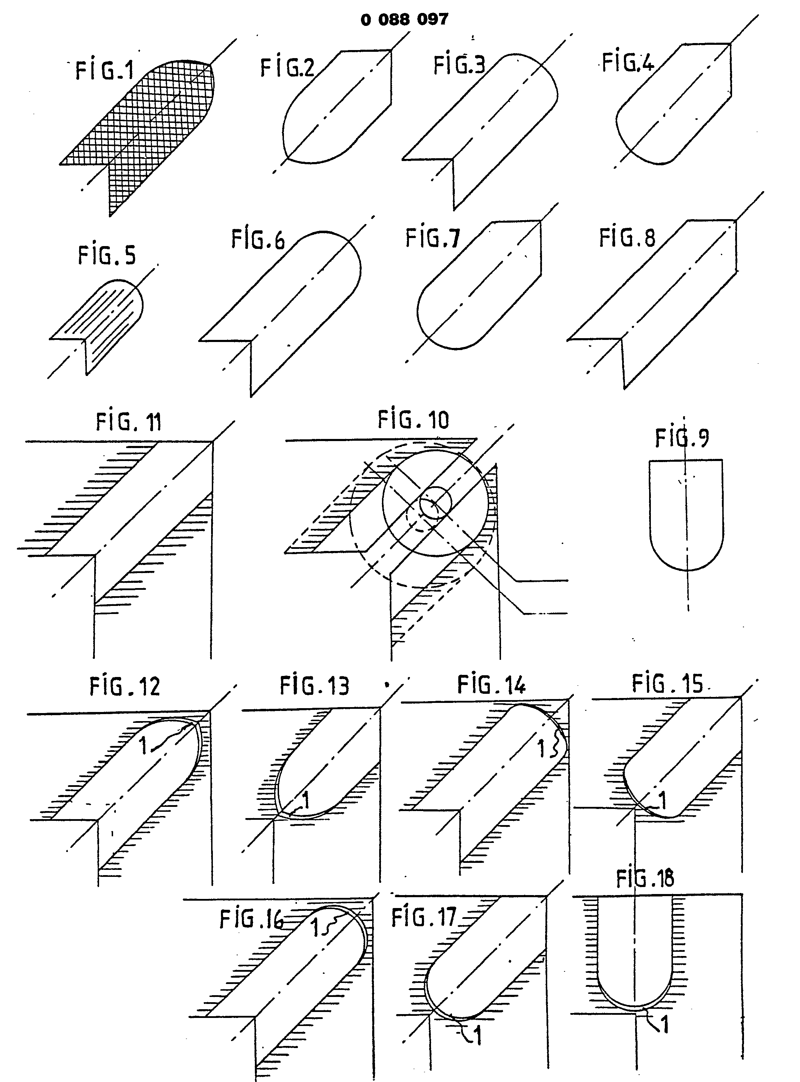

Les pièces d'angles montrées sur les figures 1 à 9 ont des formes qui varient en fonction des outils employés pour usiner leur emplacement et en fonction du sens de son usinage qui peut aller de l'intérieur vers l'extérieur ou vice versa.

Lorsqu'on creuse le logement des pièces d'angles montrées figures 1, 2 et 8 on utilise une défonceuse et la pièce de la figure 1 à tête ogivale et queue en sifflet à deux pointes formant un angle de 90° se logera comme montré figure 12 ; la pièce de la figure 2 à tête biseautée et queue ogivale se loge dans l'évidement, figure 13, tandis que la pièce de la figure 8 à tête biseautée et queue en sifflet est logée dans l'angle montré figure 11. Si on utilise une mortaiseuse à bédane vibrant au lieu de la défonceuse pour creuser le logement des pièces d'angles des figures 3, 4 et 8 on pourra loger celle de la figure 3 à tête arrondie et queue en sifflet comme l'illustre la figure 14, celle de la figure 4 à tête biseautée et queue arrondie dans le creux de l'angle figure 15 et la pièce figure 8 comme précédemment figure 11.

Dans le cas où le travail s'effectue avec une mortaiseuse à chaîne, on peut loger les formes de la figure 6, tête ronde et queue en sifflet, dans l'angle figure 16, celles de la figure 7, tête biseautée et queue arrondie dans l'angle figure 17 la pièce figure 8 allant, comme précédemment, équiper l'angle figure 11.

Les parties arrondies des pièces figures 6 et 7 ont un rayon correspondant à celui de la chaîne utilisée.

Dans le cas de l'angle montré figure 11, l'usinage du logement peut être fait dans un sens ou dans l'autre puisque ledit logement traverse de part en part.

La pièce d'angle montrée figure 9 est destinée à l'angle illustré figure 18.

On remarque sur les figures 12 à 18 l'espace 1 qui représente le jeu nécessaire en bout pour un éventuel excès de colle et pour une mise en place plus facile.

Les assemblages d'angles montrés sur ces figures 12 à 18 permettent d'empêcher les fentes dues au retrait du bois.

La pièce d'angle montrée figure 5 est métallique entaillée ou striée ; elle a pour but de permettre un chevillage réel à l'ancienne et les assemblages de cadre dont les éléments sont de faible section.

Sur la figure 9 on a représenté la pièce d'angle qui se loge dans l'angle figure 18 qui est un assemblage d'équerre sans coupe d'onglet.

Quant à la figure 10 elle donne le tracé du logement obtenu à la défonceuse avec une fraise diamètre 50, trait plein et celui obtenu avec une fraise diamètre 70, trait en pointillé.

La précision constante de l'usinage de l'emplacement des pièces d'angle des figures 1 à 8 au point de vue parallèlisme et épaisseur, est garantie par le fraisage ou le mortaisage simultané d'un montant et d'une traverse (soit un angle du cadre désiré). Cet usinage se fait côtés à assembler disposés bien à plat dans un gabarit adéquat.

Pour assurer un assemblage et une planéité encore plus parfaite des cadres usinés, la pièce d'angle elle-même est calibrée en épaisseur par ponçage de ses faces. Ce calibrage permet de glisser manuellement sans effort incontrôlé, la pièce d'angle préalablement encollée dans son logement sans machine spéciale.

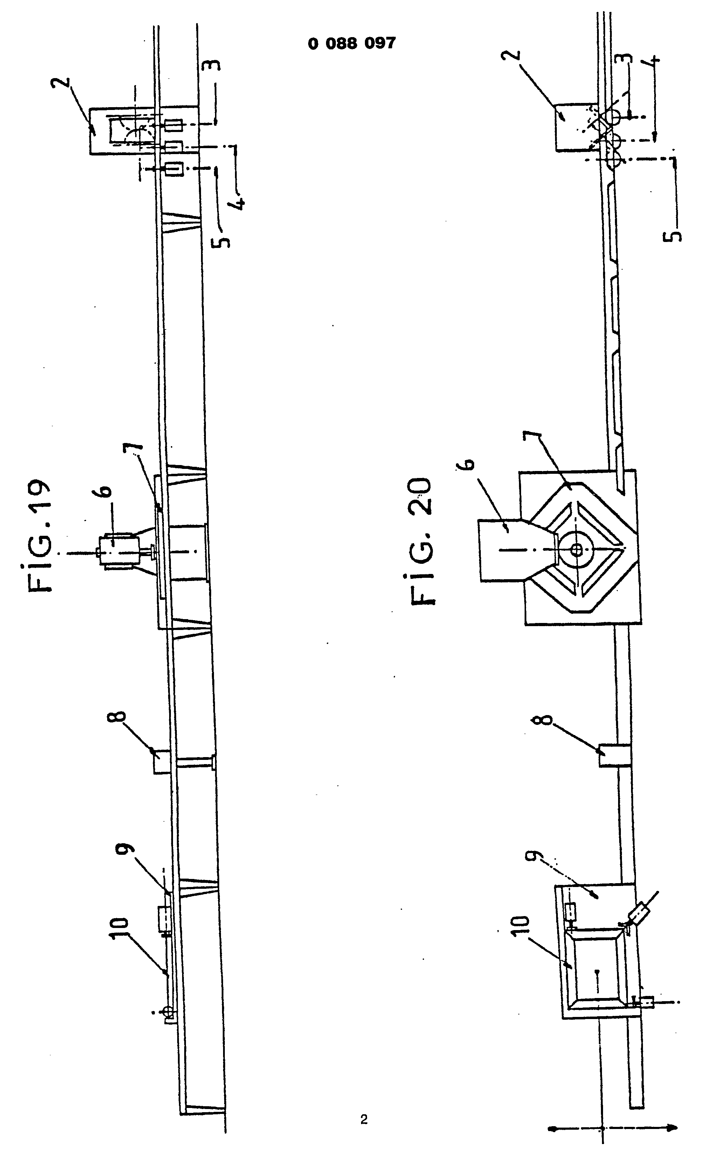

Le déroulement du procédé qui est illustré sur les figures 19 et 20 comprend dans une première phase : le pré-débit en longueur est égal au développement des quatre côtés du cadre désiré ; les longueurs obtenues sont usinées quatre faces (moulurées ou non suivant la nécessité) présentées devant la tronçonneuse verticale 2 à deux lames circulaires calées à 90°. Elles sont coupées d'onglet par un mouvement de monte et baisse de la tête de la tronçonneuse. Les côtés ainsi obtenus constituent le cadre désiré ; la longueur et la largeur de chaque côté sont présélectionnées grâce aux butées 3 disposées à cet effet et qui permettent d'affranchir le bois, la butée 4 donne la largeur du cadre, et la butée 5 donne la longueur du cadre ; si le cadre est carré, après la première butée 3, la deuxième butée 4 est répétitive.

Dans une deuxième phase on procède à l'usinage de l'emplacement de la pièce d'angle par exemple à la défonceuse :

Les côtés du cadre sont acheminés jusqu'à la défonceuse 6 où ils sont placés et serrés dans un gabarit 7 reconstituant le cadre voulu, mais avec l'espacement permettant le passage de l'outil. Le gabarit est calculé de façon à permettre l'usinage angle par angle de deux côtés du cadre, soit un montant et une traverse à la fois. Ceci permet l'usinage en une seule fois du logement d'une pièce d'angle.

En opérant ainsi, on obtient la garantie absolue d'un logement parfaitement parallèle à la table de la défonceuse qui sert de référence, on obtient aussi un fraisage d'emplacement constant en épaisseur et dimensions pour les quatre logements des pièces d'angle du cadre. L'usinage peut être fait sans difficulté de l'intérieur du cadre vers l'extérieur ou de l'extérieur vers l'intérieur. Il est également possible d'usiner les quatre emplacements des pièces d'angle à la fois avec quatre têtes de défonçage disposées sous la table ou suspendues pour permettre une mise en place facile des montants et traverses du cadre à usiner. La dimension minimum du cadre sera limitée à l'encombrement des têtes de défonçage.

Les quatre côtés du cadre obtenus sont acheminés vers le poste collage 8 où chaque onglet est encollé ainsi que les pièces d'angle.

Au pré-montage les pièces d'angle sont glissées dans leur logement puis le cadre est assemblé au poste cadrage 9.

Si le cadre est monté autour d'un panneau (de porte par exemple), les côtés sont pré-assemblés (pièces d'angle en place) autour du panneau.

On procède alors au montage-cadrage définitif au poste 9 dans un gabarit mobile 10 qui est évacué au poste séchage non représenté si le cadre ou la porte ainsi obtenus ne peuvent être chevillés. Le nombre de gabarits est fonction du temps de séchage. Si au contraire, la porte ou le cadre désirés peuvent être chevillés, on posera soit des agrafes aiguilles dites invisibles, soit de véritables chevilles bois à l'ancienne.

Le verrouillage de l'assemblage des cadres ou des portes ainsi réalisé on peut supprimer le poste séchage.

L'usinage peut être réalisé avec une mortaiseuse à bédane vibrant et aller de l'extérieur vers l'intérieur en utilisant une mortaiseuse à une seule tête, celle-ci prend la place de la défonceuse 6. Dans le gabarit 7 il n'y a plus lieu de prévoir le passage de la queue de la fraise qui usine l'emplacement de la pièce d'angle. Les côtés sont donc placés dans le gabarit, onglets préalablement encollés et serrés, ce qui supprime ainsi les postes cadrage et collage.

L'usinage de l'emplacement des pièces d'angle est réalisé angle par angle par rotation du gabarit. Avant d'enlever le cadre on met en place les pièces d'angle après les avoir encollées. Si le cadre est agrafé ou chevillé, il est placé dans le gabarit dos apparent. S'il est chevillé à l'ancienne, il sera placé parement apparent. S'il y a un panneau central (portes de meubles, etc.) il est mis en place au départ. On obtient ainsi un cadre ou une porte terminés qui peuvent être poncés immédiatement.

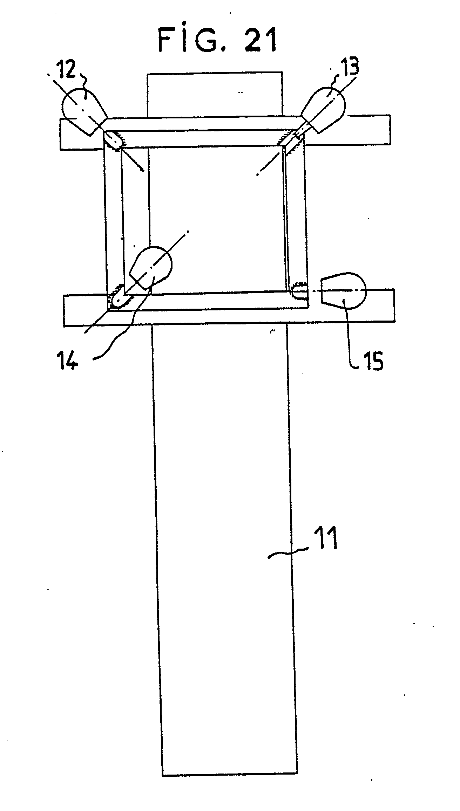

On peut aussi employer comme montré figure 21 une machine à 4 têtes, cette machine peut utiliser tous les types d'outils et pourra donc recevoir des têtes de mortaiseuses à bédanes ou à chaînes comme des têtes de perçage ou de mortaiseuse à mèches.

Comme on le voit sur la figure 21 la machine est formée d'un socle 11 sur lequel reposent un bâti fixe et un bâti mobile.

Sur chacun des bâtis, sont fixés les groupes d'usinage 12 à 15.

Les groupes d'usinage 12 et 13 sont alignés et leur position fixe. Ils donnent la référence du cadrage. Ils se rapprochent ou s'éloignent par le bâti mobile.

Les groupes d'usinage 14 et 15 sont mobiles pour obtenir les différentes dimensions possibles des cadres. Ils se déplacent dans des glissières sur leur bâti correspondant.

Chaque groupe d'usinage 12 à 15 possède sa propre glissière pour pouvoir s'orienter en fonction de l'angle d'assemblage désiré. Cet angle peut être différent pour chaque groupe en fonction du cadre usiné. Si les groupes d'usinage retenus sont des défonceuses, l'emploi du gabarit 7 est nécessaire. Dans les autres cas, la machine comportera ses propres presseurs assurant la mise en contact des éléments du cadre et la mise à l'équerre de ce dernier.

Suivant la dimension des cadres tous les groupes de la machine peuvent travailler dans les deux sens : soit de l'intérieur vers l'extérieur, ou le contraire. Ils peuvent également usiner l'emplacement de tous les types de pièces d'angle figures 1 à 8.

Le nombre de groupe d'usinage varie en fonction du nombre d'opérations envisagées et du matériau employé.

Si le matériau est le bois : dans la majorité des cas un pré-débit est obligatoire et le processus schématisé des figures 19 et 20 sera obligatoire, avec les variantes exposées plus haut, qui remplacent la défonceuse 6 soit par des mortaiseuses ou par la machine décrite ci-dessus qui raccourcit le processus en groupant au même poste l'usinage, l'encollage, le cadrage et le chevillage.

Si le matériau est un profilé plastique ou un profilé métallique : la qualité du produit devient constante et un pré-débit n'est plus indispensable. Il est possible de prévoir la coupe des quatre onglets en une seule opération sur la machine de la figure 21 en rapportant quatre têtes de tronçonneuses qui coupent les quatre profilés superposés deux par deux, les uns sur les autres.

Deux profilés d'une longueur standard sont présentés (et seront les traverses) sur les bâtis droit et gauche, puis deux autres longueurs de profilés seront présentés (ce seront les montants) perpendiculairement aux premiers et superposés à ceux-ci, soutenus entre les tronçonneuses par deux appuis-guides. Les tronçonneuses coupent simultanément les quatre onglets. Cette coupe étant faite, les traverses reposent sur les bâtis droit et gauche. On éjecte les chutes, les deux appuis-guides s'abaissent et les montants reposent à leur tour sur les bâtis droit et gauche. On procède alors au cadrage et à l'assemblage du cadre. Une fois ce dernier enlevé, on fait glisser les profilés pour un nouveau tronçonnage. Cette technique peut s'employer avec le bois mais seulement si l'on se trouve en face d'un produit parfaitement homogène et sans défauts.

On peut aussi usiner les logements de pièces d'angles de l'intérieur vers l'extérieur en utilisant une machine à une ou quatre têtes, pour les pièces d'angles des figures 3 et 8, les dimensions minima du cadre à usiner sont dans ce cas fonction de l'encombrement de la tête de mortaisage. Cet usinage est possible pour les petits cadres mais angle par angle, les quatre côtés du cadre étant mortaisés deux par deux sur une mortaiseuse à une tête. On reprend ensuite le processus collage cadrage.

L'usinage à la mortaiseuse à chaînes des logements de pièces d'angles est en tous points semblables à celui obtenu avec une mortaiseuse à bédanes. Il convient pour les pièces d'angles des figures 6, 7 et 8.

L'usinage à la mortaiseuse à mèches requiert le même processus que les deux précédents mais présente le désavantage d'être peu performant.

Lorsque les cadres sont de forte épaisseur il est très facile de prévoir deux ou trois pièces d'angles dont l'usinage simultané de l'emplacement est sans difficulté.

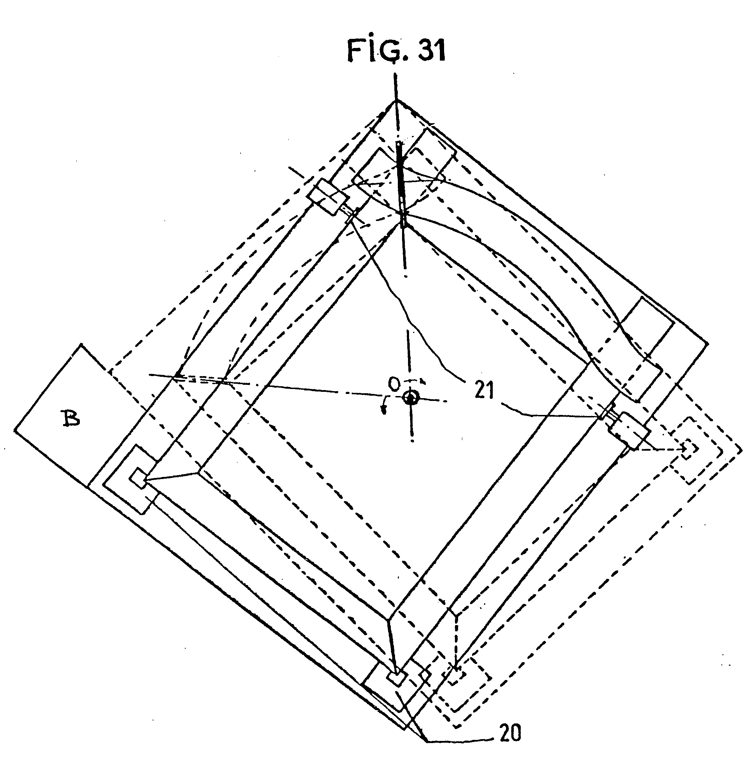

Lorsqu'il s'agit de cadres dont les traverses ne sont pas de la même largeur que les montants, l'usinage n'entraîne aucune difficulté. Les têtes qui usinent l'emplacement de la pièce d'angle sont orientées par rapport à l'onglet qu'elles font ensemble quand elles sont multiples. Sur une machine simple on oriente le gabarit montré figure 31 à chaque opération.

Si les cadres comportent une ou plusieurs traverses de forme dites à chapeau de gendarme ou cintrées pour les châssis de fenêtre et les portes de style, etc... Cette traverse de forme 17 sera pré-débitée en longueur et usinée à part.

Une bande est pré-débitée en tenant compte de la longueur développée des trois côtés restants, et usinée à la demande. La coupe des onglets n'est faite que sur les onglets reliant la traverse basse aux parties basses des deux montants comme montré figures 19 et 20 avec la tronçonneuse 2.

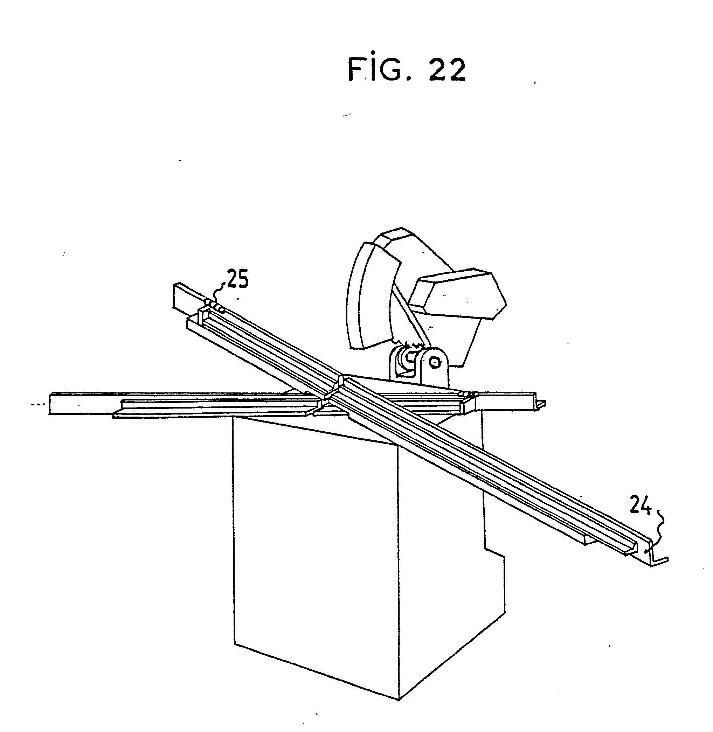

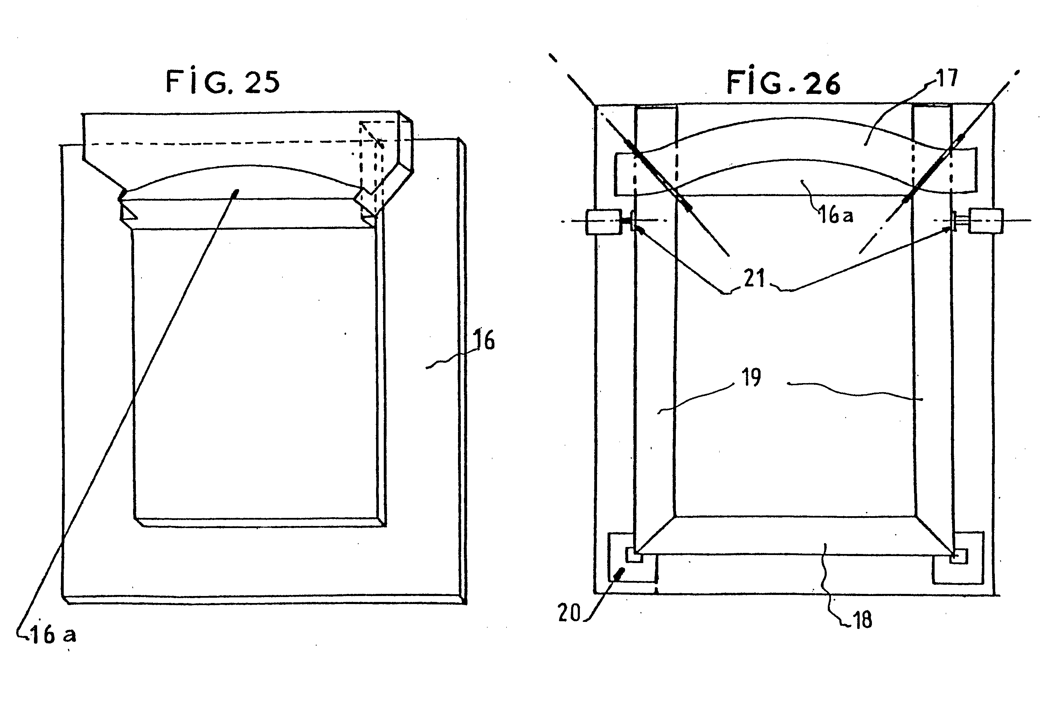

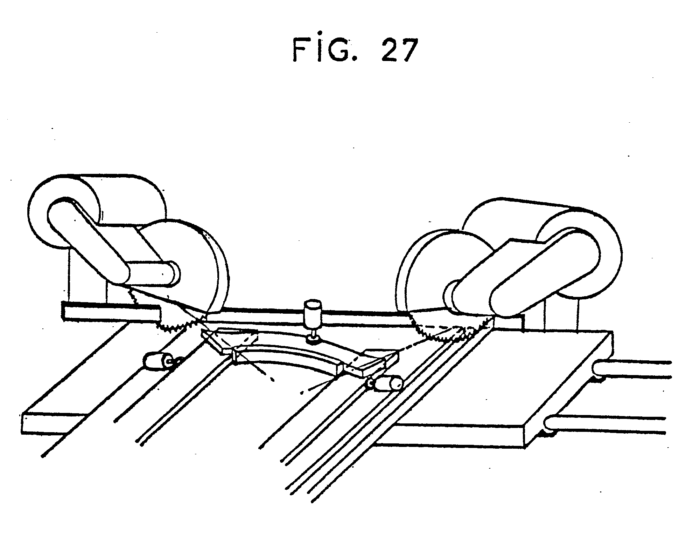

Les coupes d'onglets reliant la traverse chapeau de gendarme 17 et les parties hautes des deux montants 19 sont faites simultanément pour obtenir un assemblage parfait sur le gabarit 16 montré figure 25. Pour cela et comme l'illustre la figure 26 on positionne sur ce gabarit 16 la traverse basse 18 et les deux montants 19 débités au préalable, onglets du bas serrés par des butées 20 en fonction des dimensions des cadres désirés. Les parties hautes sont plaquées contre le gabarit 16 par des presseurs 21. La partie haute du gabarit 16 est usinée de façon à permettre de superposer et presser la traverse haute (cintrée ou chapeau de gendarme) sur les deux montants 19 qui sont déjà serrés sous le support de la forme épousant le profil de la traverse de forme 16a. Les quatre côtés du cadre sont positionnés et pressés dans le gabarit 16. Le gabarit est soit fixé sur la table de la tronçonneuse double comme montré figure 27 préalablement réglée aux dimensions et aux angles d'assemblage désirés, et la coupe simultanée des onglets des montants et de la traverse de forme est alors exécutée ; soit fixé devant une tronçonneuse à une lame illustrée figure 22. On tronçonne les deux coupes, l'une après l'autre en orientant le gabarit autour de l'axe 0 jusqu'à la butée B, qui donne la coupe de gauche en trait plein et la coupe de droite en pointillé (figure 31). Dans les deux cas, le tronçonnage effectué, on reprend le processus du procédé au poste défonçage 6 des figures 19 et 20.

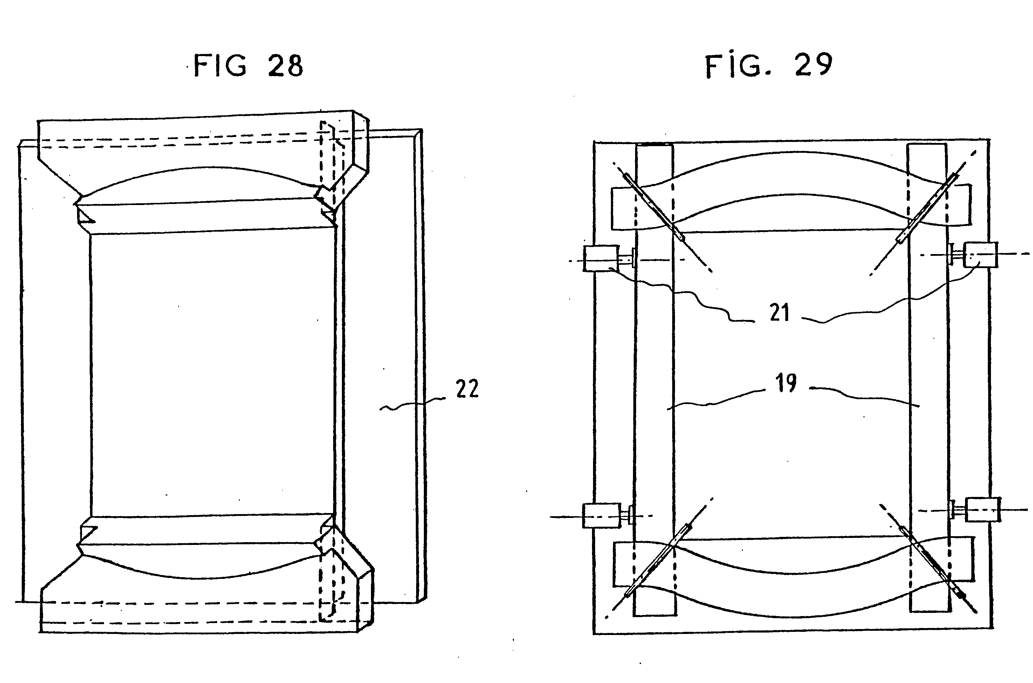

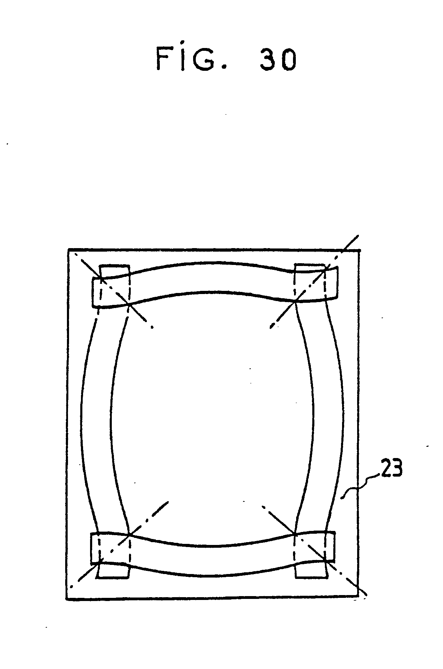

Dans le cas où les cadres comportent deux et même quatre traverses de forme l'usinage et le débit de chaque côté sont faits séparément. Les coupes d'onglets sont faites simultanément sur les quatre côtés montés dans le gabarit 22 créé à cet effet figure 28 quand il y a deux traverses de forme, et, dans le gabarit 23 figure 30 quand il y en a quatre avec l'aide de deux tronçonneuses doubles opposées de la figure 27. Le processus du procédé pour ces deux derniers cas reprend également ensuite au poste défonçage 6 des figures 19 et 20.

La pièce d'angle montrée figure 9 permet d'assembler deux pièces à l'équerre. L'usinage de son emplacement ne peut être fait que de l'extérieur vers l'intérieur, mais avec tous les types de machine à une ou quatre têtes montrée figure 21.

Cet assemblage concerne certains types de cadres pour des miroirs, des portes de meubles, etc... ainsi que la menuiserie. Il permet d'avoir un cadre, une porte ou un châssis fini collé, chevillé à l'ancienne ou non, à un seul poste de travail sans manipulation. Dans ce cas, le débit des pièces se fait à une tronçonneuse de longueur, à une seule lame. Exception faite pour les châssis à traverse cintrée qui devront suivre le processus utilisé pour les traverses dites à chapeau de gendarme ou cintrées figure 30.

Pour des cadres hexagonaux ou octogonaux le débit peut se faire avec la tronçonneuse montrée figure 22 équipée de guides 24. On place deux longueurs pré-débitées et usinées, moulurées ou non, dans les guides superposés 24. La première coupe fait l'affranchissement et les deux premiers onglets. On pousse les deux longueurs contre les butées 25, préalablement réglées à la longueur désirée, et on fait des coupes successives dont le nombre correspond à la quantité d'éléments nécessaires pour constituer le cadre à faire. Ce débit donne des éléments avec des coupes parallèles ; repris deux par deux et tronçonnés à nouveau à une extrémité, on obtient les éléments définitifs.

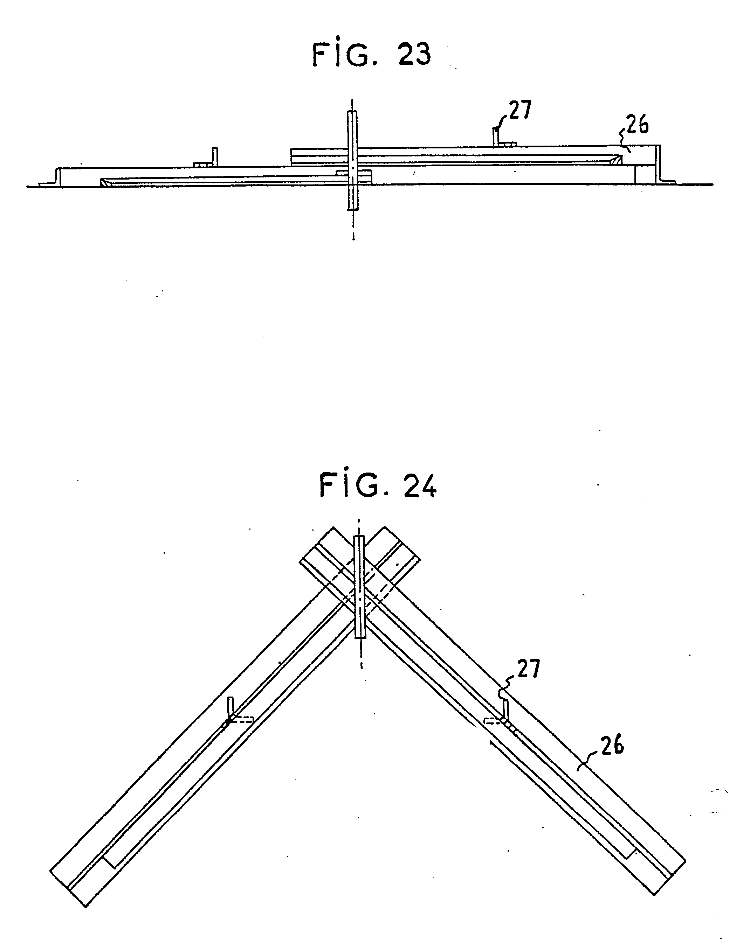

Le débit peut se faire également sans les guides 24 figures 23 et 24, les éléments du cadre sont coupés d'équerre. On place deux éléments l'un superposé à l'autre dans d'autres guides 26 orientés à l'angle voulu et fixés sur la tronçonneuse figure 22. La première coupe affranchit et fait en même temps les deux premiers onglets ; on retourne les éléments et on pousse les onglets contre des butées 27 des guides 26. On fait ensuite la deuxième coupe. On a ainsi deux éléments terminés, onglets parfaitement parallèles. On répète l'opération en fonction du nombre d'éléments nécessaires à la constitution du cadre. Quand les sections doivent être plus importantes (cadres de miroirs, de tableaux, etc...) la pièce d'angle dans tous ses types des figures 1 à 9 est à nouveau utilisée.

Pour fabriquer des cadres ronds ou ovales la difficulté rencontrée réside dans l'obtention d'onglets qui plaquent parfaitement afin de rendre les joints invisibles.

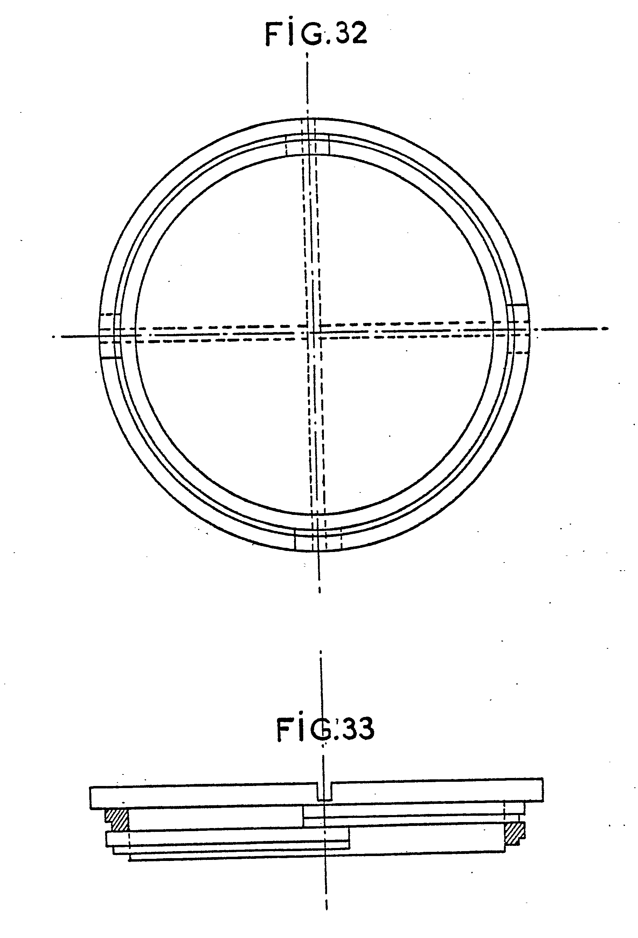

La coupe des onglets est obtenue en utilisant un gabarit de forme épousant la courbure intérieure du cadre montré figures 32 et 33. Les éléments pré-débités sont disposés superposés les uns par rapport aux autres, autour du gabarit, et serrés contre lui. Le gabarit est alors présenté devant la tronçonneuse de la figure 22, et l'onglet à couper est positionné par une réglette fixée sur la table de la tronçonneuse qui coulisse dans la rainure usinée sous le gabarit des figures 32 et 33 dans l'axe de la coupe à faire. Le gabarit est présenté autant de fois qu'il y a de coupes. Comme pour les autres cadres si les sections et la rigidité l'exigent, les pièces d'angle des figures 1 à 9 sont utilisées dans les conditions décrites.

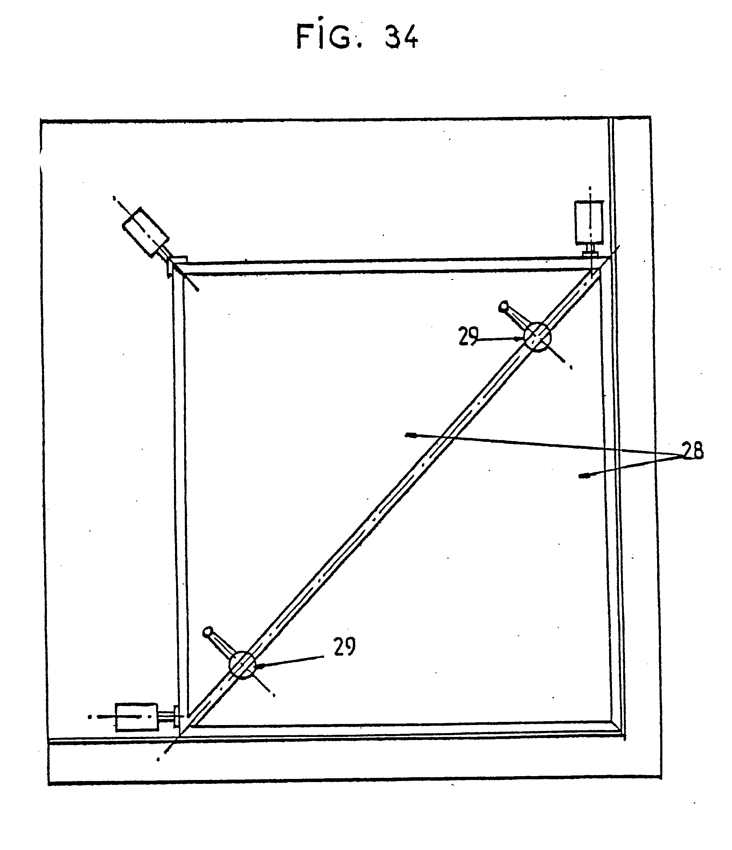

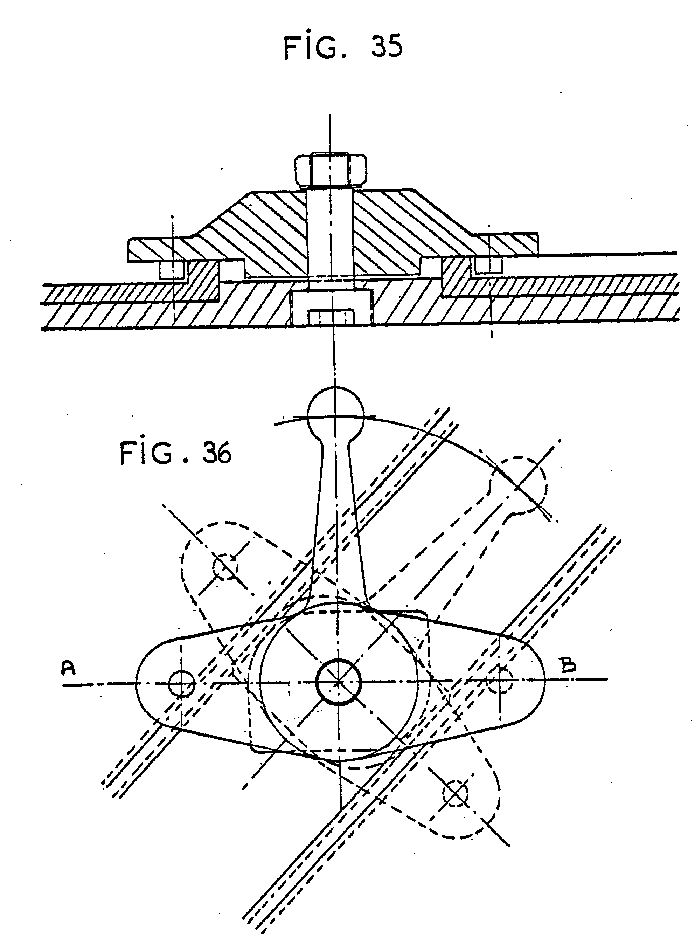

Lorsqu'on se trouve en présence de cadres de faible section assemblés d'onglet sans pièce d'angle, on peut utiliser le même procédé en supprimant seulement le poste usinage des emplacements des pièces d'angle. Ces types de cadres peuvent parfois cependant être assemblés par la pièce d'angle métallique montrée figure 5. La mise à l'équerre de ces cadres provoque parfois des déformations. Pour garantir un bon cadrage, les éléments du cadre sont serrés contre le gabarit montré figure 34. Ce gabarit tient compte de cette déformation qui tend à resserrer le cadre sur le gabarit une fois assemblé ce qui rend son dégagement malaisé. Pour éviter ce désagrément, le gabarit est composé de deux parties mobiles 28 qui s'écartent ou se rapprochent par l'intermédiaire des deux cames 29 montrées en détail figures 35 et 36 ce qui permet d'avoir une position serrage à la dimension du cadre, et une position desserrage qui permet l'enlèvement aisé du cadre terminé, ainsi que la mise en place des éléments du cadre suivant. Les cadres ainsi réalisés ont une qualité constante, les onglets bien plaqués sans risque de décalage. Pour avoir une concordance parfaite des profils de la moulure à l'onglet, les éléments du cadre sont collés puis placés dos apparent dans le gabarit et agrafés. Le cadre est enlevé et poncé au dos immédiatement pour lui donner une planéité parfaite. Ces cadres peuvent aussi avoir une ou plusieurs traverses de forme : type chapeau de gendarme ou cintrées. Leur débit sera traité de la même façon que pour lesdits cadres.

En petites séries, ce procédé avec pièce d'angle est le même, la tronçonneuse figure 22 peut être sans socle et commandée au pied mécaniquement ou à la main par une poignée. Les gabarits ne changent pas pour l'usinage de l'emplacement des pièces d'angle.

La défonceuse ou la mortaiseuse est simple et a une seule tête. Eventuellement la défonceuse peut être portative et la mortaiseuse sans socle.

L'application artisanale du procédé est possible en utilisant les mêmes dispositifs, l'emploi du matériel se limite à une défonceuse portative et une tronçonneuse figure 22 sans socle.

On peut aussi utiliser le procédé dans le bricolage en employant des dispositifs pour remplacer les boîtes à coupe dont la précision est aléatoire. La scie employée est une scie à main et les dispositifs comportent des guides qui maintiennent la lame de la scie verticale et lui assurent une course rectiligne. Ces guides sont en bois, en multiplis ou en plastique et doivent être interchangeables. Le procédé permet même dans ce cas une coupe de deux onglets à la fois, assure une précision de coupe constante et évite les erreurs dues à la manipulation des pièces.

On peut aussi étendre l'application du procédé objet de l'invention à l'assemblage de petits meubles et de tiroirs en utilisant des pièces d'angles du type représenté sur la figure 1 avec une extrémité plate et une extrémité ogivale ou avec deux extrémités ogivales en usinant simultanément les logements avec une défonçeuse portative et au moyen d'une plaque guide dont les découpes reproduisent l'emplacement des pièces d'angles.

**Revendications**

1. Procédé d'assemblage de cadres à coupes d'onglets avec pièces d'angles qui consiste à opérer successivement le tronçonnage des côtés du cadre, l'usinage du logement de chaque pièce d'angle dans les éléments du cadre, l'encollage des pièces d'angles et de leur logement, le prémontage des pièces d'angles dans leur logement respectif, l'assemblage et le serrage du cadre, caractérisé par le fait que les côtés du cadre sont tronçonnés aux dimensions désirées par une coupe simultanée des deux côtés d'un angle à la fois au moyen d'une tronçonneuse verticale (2) à deux lames circulaires calées à 90° et que le logement de chaque pièce d'assemblage est usiné dans chaque angle du cadre au moyen d'une défonceuse (6) usinant simultanément ledit logement dans deux des quatre côtés adjacents du cadre, placés et retenus dans un gabarit (7) susceptible de pivoter pour amener chaque angle du cadre au droit du poste d'usinage.

2. Procédé suivant la revendication 1, caractérisé par le fait que les côtés du cadre sont tronçonnés par une coupe simultanée des deux côtés d'un angle de deux éléments du cadre superposés perpendiculairement, au moyen d'une tronçonneuse verticale à une lame circulaire au lieu de ces deux lames circulaires, ou au moyen de quatre tronçonneuses verticales à une lame circulaire susceptibles de couper les quatre onglets à la fois des éléments superposés deux par deux.

3. Procédé suivant la revendication 1, caractérisé par le fait que le logement de chaque pièce d'assemblage est usiné dans les quatre angles du cadre au moyen de quatre têtes d'usinage (12-15), rectifiant les coupes des quatre angles et usinant simultanément l'emplacement de la pièce d'angle des quatre côtés du cadre retenus dans un gabarit.

## Claims

1. A method of assembling mitered frames with angle pieces which consists in successively sawing the sides of the frame, machining, the housing for each angle piece in the elements of the frame, gluing the angle pieces and their housing, premounting the angle pieces in their respective housing, assembling and clamping the frame, characterized by the fact that the sides of the frame are sawn to the desired dimensions by simultaneously cutting the two sides of an angle at the same time by means of a vertical cross cut saw (2) with two circular blades set at 90° and by the fact that the housing for each assembly piece is machined in each angle of the frame by means of a recessing machine (6) forming simultaneously said housing in two of the four adjacent sides of the frame, placed and held in a jig (7) capable of pivoting for bringing each angle of the frame in line with the machining station.

2. The method according to claim 1, characterized by the fact that the sides of the frame are sawn by simultaneously cutting the two sides of an angle of two elements of the frame superimposed perpendicularly, by means of a vertical cross cut saw with one circular blade instead of these two circular blades, or by means of four vertical cross cut saws with a circular blade capable of cutting at the same time the four miters of the elements superimposed two by two.

3. Method according to claim 1, characterized by the fact that the housing for each assembly piece is machined in the four angles of the frame by means of four machining heads (12-15), rectifying the cuts of the four angles and simultaneously machining the position of the angle piece of the four sides of the frame held in a jig.

## Patentansprüche

1. Verfahren zum Zusammenbau von Rahmen im Gehrungsschnitt mit Winkelstücken welches darin besteht, nacheinander den Schnitt der Seiten des Rahmens, die Bearbeitung der Aufnahme eines jeden Winkelstückes in den Bestandteilen des Rahmens, die Verklebung der Winkelstücke und ihrer Aufnahme, die Vormontage der Winkelstücke in ihre jeweilige Aufnahme, den Zusammenbau und das Festspannen des Rahmens durchzuführen, dadurch gekennzeichnet, dass die Seiten des Rahmens durch einen gleichzeitigen Schnitt der beiden Seiten eines Winkels mit einer senkrechten Abstechsäge (2) mit zwei zu 90° angeordneten kreisförmigen Sägeblättern zu den gewünschten Abmessungen Zugeschnitten werden und dass die Aufnahme eines jeden Zusammenbauteiles in jedem Winkel des Rahmens bearbeitet wird, und zwar mit einem Fräser (6), welcher die besagte Aufnahme gleichzeitig an zwei der vier angrenzenden Seiten des Rahmens, welche in einer Lehre (7), die drehen kann, um jeden Winkel des Rahmens an die Bearbeitungsstation heramzufahren, eingelegt und gehalten sind, bearbeitet.

2. Verfahren gemäss dem Patentanspruch 1, dadurch gekennzeichnet, dass die Seiten des Rahmens mit einer senkrechten Abstechsäge mit einem kreisförmigen Sägeblatt anstatt dieser beiden kreisförmigen Sägeblätter bzw. mit vier, senkrechten Abstechsägen mit einem kreisförmigen Sägeblatt, die gleichreitig die vier Gehrungsschnitte der in Zweiergruppen übereinander angeordneten Bestandteile vornehmen können, zugeschnitten werden, und zwar durch einen gleichzeitigen Schnitt der beiden Seiten eines Winkels von zwei senkrecht übereinander angeordneten Bestandteilen des Rahmens.

3. Verfahren gemäss dem Patentanspruch 1, dadurch gekennzeichnet, das die Aufnahme eines jeden Zusammenbauteiles in den vier Winkeln des Rahmens mit vier Bearbeitungsköpfen (12-15), die die Schnitte der vier Winkel nachschleifen und gleichzeitig den Aufnahmeplatz des Winkelsctückes der vier Seiten des Rahmens, die in einer Lehre gehalten werden, nacharbeiten, bearbeitet wird.

FIG.1

FIG.2

FIG.3

FIG.4

FIG.5

FIG.6

FIG.7

FIG.8

FIG.11

FIG.10

FIG.9

FIG.12

FIG.13

FIG.14

FIG.15

FIG.16

FIG.17

FIG.18

FIG.19

FIG.20

# FİG. 21

# FIG. 22

# FIG. 23

# FIG. 24

# FIG. 25

# FIG. 26

16a

16

17

16a

21

19

20

18

0 088 097

# FIG. 27

# FIG 28

# FİG. 29

22

21

19

0 088 097

# FIG. 30

23

FIG. 31

FIG.32

FIG.33

FIG. 34

FİG. 35

FİG . 36

A                    B